(19)

Europäisches
Patentamt

European
Patent Office

Office européen
des brevets

(11)   **EP 3 657 426 A1**

(12)   **EUROPEAN PATENT APPLICATION**

(43) Date of publication:
    **27.05.2020   Bulletin 2020/22**

(21) Application number: **18208085.3**

(22) Date of filing: **23.11.2018**

(51) Int Cl.:
    **G06Q 40/04** (2012.01)      **G06Q 40/06** (2012.01)

| | |
|---|---|
| (84) Designated Contracting States:<br>**AL AT BE BG CH CY CZ DE DK EE ES FI FR GB**<br>**GR HR HU IE IS IT LI LT LU LV MC MK MT NL NO**<br>**PL PT RO RS SE SI SK SM TR**<br>Designated Extension States:<br>**BA ME**<br>Designated Validation States:<br>**KH MA MD TN** | (71) Applicant: **Makalu AS**<br>**0760 Oslo (NO)**<br><br>(72) Inventor: **Dybvik, Stein Schønning**<br>**0760 Oslo (NO)**<br><br>(74) Representative: **IP-Safe ApS**<br>**Banegårdspladsen 1**<br>**1570 Copenhagen V (DK)** |

(54)   **AN AUTOMATED FINANCIAL INVESTMENT SYSTEM**

(57)      The present invention provides the ability of an investor to control an investment strategy via an application program running in for example a smart phone. The client or application program running in the investor's smart phone is communicating with a backend server system providing computer implemented management methods of the chosen strategy, and is providing different feedback information to the investor of obtained results etc. The backend server system may be communicating with a stock exchange trading system, for example a trading robot. The combined backend server system and the trading system or trading robot makes up an example of a computerized fund management system according to the present invention.

Figure 14

**Description**

FIELD OF THE INVENTION

The present invention relates to a computer implemented fund managing system comprising a mobile phone configured with an application program in communication with a fund managing server system enabling an investor to define and execute investment strategies from the configured mobile phone.

BACKGROUND OF THE INVENTION

The financial sector and especially the stock exchange market has been invaded by computerized solutions based on artificial intelligence and machine learning. One reason behind the development is the speed of trade provided by machines. When only humans were involved with trade on respective stock exchanges, a specific stock could be priced differently in New York compared with for example the stock exchange in Oslo. Smart traders could then by stocks at a lower price at one stock exchange and selling them at a higher price on another stock exchange. The same situation could also be found with respect to commodity exchanges around the world.
One consequence of the technological development is that slow traders are losing in the market. Research of the computerized stock exchange markets indicates that the winners are the large commercial banks trading in large volumes using large amounts of money. The results indicates that the large commercial banks manage better when there is more robots than humans involved in the trading.
Investors with smaller amount of money has the ability to invest in funds. Two types of funds is available.

1) Active managed funds

In this setup, a talented fund manager (or team) invests the investor's money as he/she sees fit. However, the fund manager draws a fee from the investment that tends to be so large that it is difficult to achieve a positive return of money over time for smaller investments.

1) Index funds

In this setup, the fund invests automatically in assets included in an index according to the distribution in market cap. This setup has low costs and the return is always the market average.
Professional managers study the markets on a daily basis and use their skills and knowledge when trading assets. Assets can be stocks, bonds etc. In contrast, when managing index funds it is not necessary to have an in-depth knowledge of specific stocks of a specific company etc. The Dow Jones Industrial Average and the S&P 500 are deigned to track the stock market in general. There are also funds or indexes that track a sector such as the IT sector, the oil industry, consumer goods etc. In addition, indexes related to different geographical regions and countries is also available. For example, indexes related to North America, Europa and Asia etc. and individual countries like China, France etc. is available.
Therefore, index funds are diversified into different investment categories defined by sectors as disclosed above. The diversification is a strategic choice that can minimize the risk of loosing money. On the other hand, the return will probably be higher if the investment strategy is more aggressive, and the investment strategy succeeds.
An index fund is used as an example. When an index fund is set up the fund is diversified with respect to the exposure of the investment in assets of different investment categories. For example geographical areas, sectors, countries, etc. When an investor buy a share of the index fund, the investor will own a percentage of the fund defined by the amount of money invested by the investor, which is distributed with different percentage of the money according to the defined diversified investment strategy set up originally by the index fund management.
An aspect of the present invention is to provide a technical infrastructure enabling an investor to control his own investment strategy by changing the percentage distribution of his invested money in different investment categories set up originally by the fund. For example, an investor may want to reduce the exposure to Asia while increasing the exposure to Europe. Inside Europe, the investor may want to be exposed only to Germany. Inside Germany, the investor may want only to be exposed to the car industry. Inside the car industry, the investor may want only to be exposed to Mercedes Benz Car Company.
It is also within the scope of the present invention that an investor can define and/or change an investment strategy provided by the professional management of active managed funds. For example, an investor can define and/or change his investment strategy by including or excluding different stocks or bonds etc. from his investments, but also change the exposure to specific sectors and/ or specific companies within specific sectors.
In prior art there is very few options for investors of influencing the investment strategy of their own money when investing in funds. In active managed funds, the fund manager(s) do all decisions, and in index funds, all decisions are calculated from the market cap distribution. The actual investor can only decide to buy more, or sell off some of the investment, and these actions often requires fees to be paid. Because of this, the investor has limited possibility to react on events in markets and thereby exercise their influence in the capacity as owner of the assets. This fact will also create a distance between the investor and the investment so that the investor has little incentive for analyzing news and events and understanding how they will affect his/her investment in the near future, or in the long run.

Therefore, prior art lacks technical solutions enabling ordinary people to invest money and at the same time to be enabled to be active in deciding an investment profile as well as being able to react as owners to events influencing for example stock markets and thereby their investment.

A further aspect of the present invention is that the fund managing system can be in direct communication with trading robots.

Therefore, there is a need of a technical solution facilitating active involvement of investors in funds.

OBJECT OF THE INVENTION

It is a further object of the present invention to provide an alternative to the prior art.

In particular, it may be seen as an object of the present invention to provide a fund management system enabling investors to change or modify investment strategies of funds via an application program in a mobile device in bidirectional communication with a server system configured to execute investors investment strategies and to provide performance feedback to investors.

SUMMARY OF THE INVENTION

Thus, the above-described object and several other objects are intended to be obtained in a first aspect of the invention by providing a computer implemented investment managing system enabling an investor to define and control own investment profiles via an application program running in a mobile phone in communication with a backend server system, which is further in communication with a trading system.

The invention is particularly, but not exclusively, advantageous for obtaining a computer implemented fund management system comprising a plurality of mobile phones (10, 10') in communication with a backend server (11), which is further in communication with a trading system (14), wherein respective mobile phones are configured to receive investment choices, either manually from respective investors, or via an interpreter executing instructions configured to implement an investment strategy.

Further, the invention comprises a computer implemented method for user controlled investments in a fund controlled by a fund managing server system, wherein the fund is investing in assets groups, wherein the computer implemented method comprises steps of:

- an investor decides an amount to invest in the fund,
- the investor activates a payment solution transferring the amount to an investment account in his name in the fund managing server system,
- the fund managing server system calculates an estimated percentage of the total fund owned by the investor,
- use the estimated percentage of the total fund of the investor with the percentage of each other investor in the fund, and update the estimated percentage accordingly,
- wait until results of the trading with the investors amount is finished, and rebalancing the fund,
- calculate investors actual percentage of the fund based on the result of the trading and the rebalancing of the fund.

Respective aspects of the present invention may each be combined with any of the other aspects. These and other aspects of the invention will be disclosed and elucidated with reference to the embodiments described herein.

DESCRIPTION OF THE FIGURES

Figure 1 illustrates an example of embodiment of the present invention.

Figure 2 illustrates further aspects of the example of embodiment in Figure 1.

Figure 3 illustrates further aspects of the example of embodiment in Figure 1.

Figure 4 illustrates further aspects of the example of embodiment in Figure 1.

Figure 5 illustrates an example of a graphical user interface according to the example of embodiment of Figure 1.

Figure 6 illustrates further aspect of a graphical user interface according to the example of embodiment of Figure 1.

Figure 7 illustrates further aspect of a graphical user interface according to the example of embodiment of Figure 1.

Figure 8 illustrates further aspect of a graphical user interface according to the example of embodiment of Figure 1.

Figure 9 illustrates further aspect of a graphical user interface according to the example of embodiment of Figure 1.

Figure 10 illustrates a graph of obtained results of the example of embodiment of Figure 1.

Figure 11 illustrates examples of steps of a method of the present invention.

Figure 12 illustrates examples of steps of a method of the present invention.

Figure 13 illustrates examples of steps of a method of the present invention.

Figure 14 illustrates further aspect of the example of embodiment illustrated in Figure 1.

DETAILED DESCRIPTION OF AN EMBODIMENT

Although the present invention is disclosed in connection with specific examples of embodiments, it should not be construed as being in any way limited to the presented examples. The accompanying claim set defines the scope of protection of the present invention. In the context of the claims, the terms "comprising" or "comprises" do not exclude other possible elements or steps. Further, the mentioning of references such as "a" or "an" etc. should not be construed as excluding a plurality. The use of reference signs in the claims with respect to elements indicated in the figures shall also not be construed as limiting the scope of the invention. Furthermore, combining individual features mentioned in different claims may possibly be advantageously, and the mentioning of these features in different claims does not exclude that a combination of features is not possible and advantageous.

An aspect of the present invention is the ability of an investor to control an investment strategy via an application program running in for example a smart phone. The client or application program running in the investor's smart phone is communicating with a backend server system providing computerized management of the chosen strategy, and different feedback information to the investor of obtained results etc.

Further, the backend server system is integrated, or is communicating, with a stock exchange trading system, for example a trading robot. The combined backend server system and the trading system or trading robot makes up an example of a computerized fund management system according to the present invention.

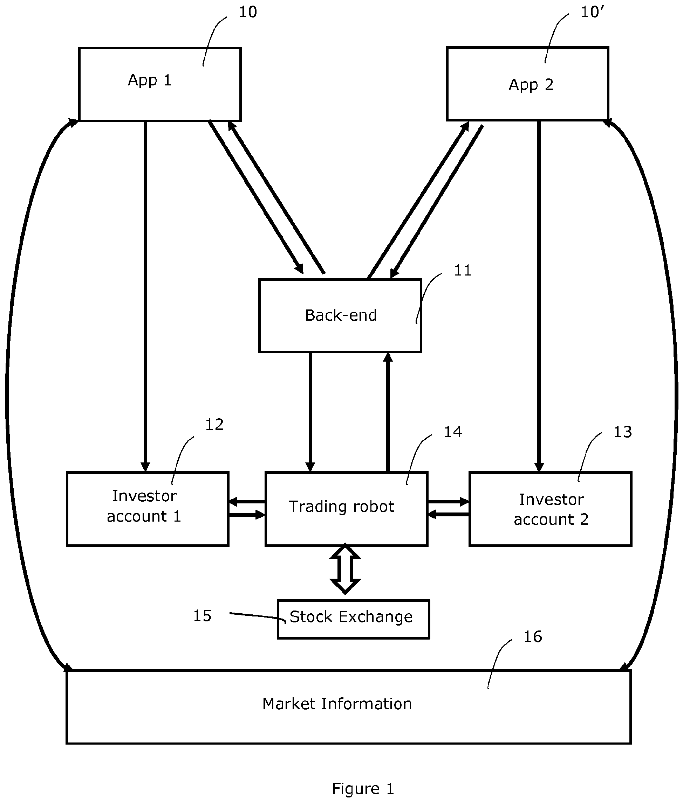

Figure 1 illustrates an example of embodiment of the present invention. At least a first mobile phone 10 operated by a first investor, and at least a second mobile phone 10' operated by a second investor is utilizing a respective downloaded application program according to the present invention being configured to communicate with a backend server system 11. The backend server system 11 is configured to manage investments done by respective investors. The first investor has an investment account 12, and the second investor has an investment account 13. The backend server system is communicating with a trading system 14 configured to buy and sell stocks or assets of different types, for example stocks bought and sold on respective stock exchanges, and assets bought and sold on commodity exchanges, for example, according to instructions communicated from the backend server system 11.

There are different investment strategies available. One common advice is of course not to put "all your eggs in one basket". Diversified investments is a strategic choice. This aspect is taken care of when for example an embodiment of the present system is managing an index fund, which by default is a diversified investment. The investment done by the investor is buying a share of the index fund, i.e. not buying specific stocks. Which specific stocks and commodities that is bought and sold is a decision made for example by a trading robot 14, under guidance by the backend server system 11. Feedback from the trading robot 14 can be communicated back to the backend server system 11, which can communicate the content of the feedback to the mobile phone 10, 10'. The investor can then decide to react to the content of the feedback.

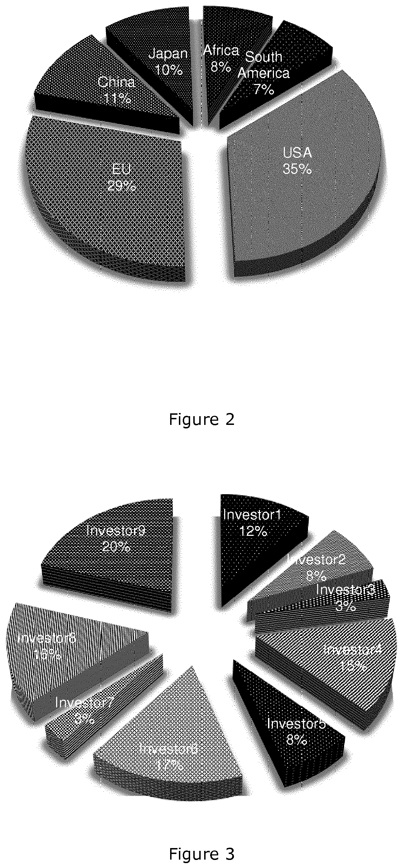

As an example, an index fund is discussed, and an index fund will invest in asset types that can be grouped based on specific parameter(s). In the following example, geographical regions are used, but this could also be sectors and/or investment product types. As all index funds, this product have two sides of the balance. The asset side is comprised of the various investment assets in a distribution that will combine all the respective investor's portfolio setups, and the liability side is comprised of all the respective investor's share of the index funds value. Use of geographical regional groups is illustrated in Figure 2. In the example, the index fund has invested 35% of the total index fund value in USA, 29% in EU, etc.

When investors buy into the index fund, money is transferred from the investors account into the account of the index fund. When this is done, the backend server system 11 is configured to assign (calculate) a percentage of the index fund associated with the investment account 12, 13. Figure 3 illustrates an example of possible percentage respective investors 1 to 9 has at a same current point in time t. When investors sell parts of what they own of the index fund, or invest more money into the index fund, the respective percentage of the index fund needs to be re-assigned. The backend server system 11 is configured to re-balance investor values. The backend server system 11 can be configured to re-balance respective investors values at any time, even in real-time. However, if the re-balancing happens too often, i.e. at a higher frequency, the operating cost of the fund increases. Use of official exchange prices, which is the end-of-day pricing of the exchanges, is the least expensive prices and is therefore a preferred time for rebalancing the fund.

More details is given below.

The value of the index fund is based on the value of respective assets on the markets owned by the index fund in different groups, for example geographical areas.

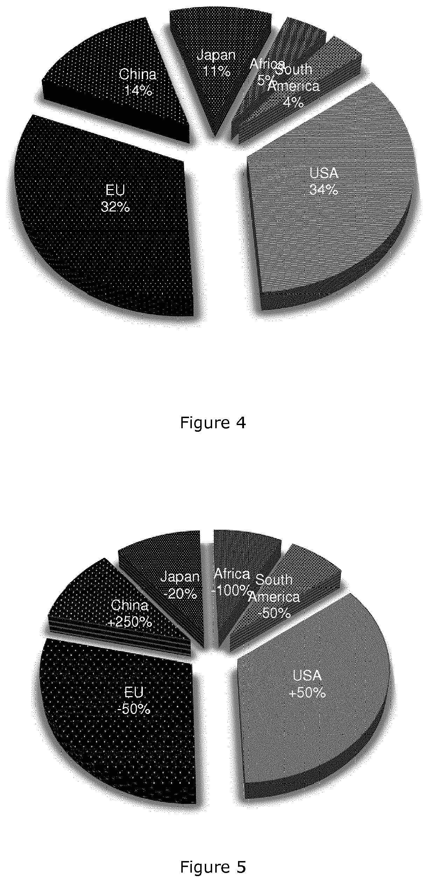

Figure 4 illustrates an example wherein the index fund's value is diversified with a percentage in each group. For example, USA with 34%, EU with 32% etc. The natural size of the respective assets groups is set as a percentage of the total market value of the fund.

The exposure of invested money to respective groups is normally a responsibility of managers of the index fund. According to an aspect of the present invention, investors can actively participate in the management of their own investment. Each investor can change the exposure against each of the various asset groups (thereby defining their own investment strategy). The input is given as a custom weight for each group, enabling each investor to change their exposure as follows: 0% (default) equals no input (e.g. follow the «natural weighting» of the group (as defined above). Otherwise the users can select any weighting between removal of all investments from the group (-100%) and the assigned top exposure level (+ X%) (+100% will imply doubling of the «natural weighting»).

An example of changing exposure by an investor input is illustrated in Figure 5. EU is reduced with 50%, USA with 50%, while China is increased with 250%, etc. With reference to Figure 1, the application program is configured to communicate with information sources 16 providing market information. The information may be communicated to the mobile phone of respective investors on a regular basis, or the investor is contacting an information source via a WEB browser, for example. Based on this information, or other types of information, like bad weather, etc. the investor can change his exposure in real time. Further details is given below.

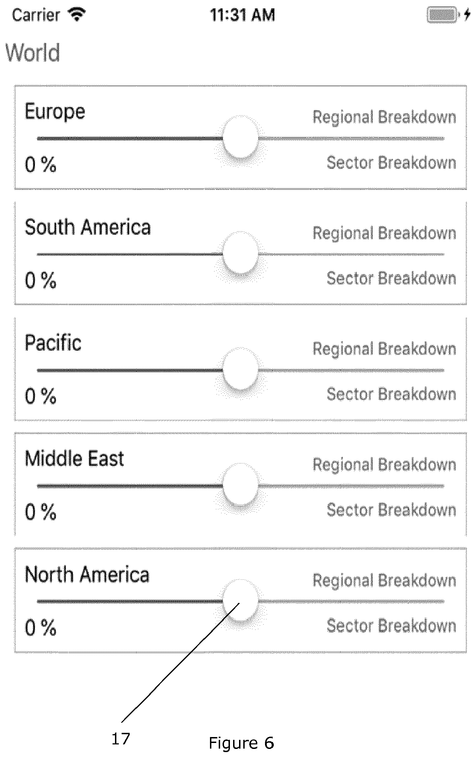

Figure 6 illustrates a graphical user interface of an application program according to the present invention. The defined grouping of the index fund is in this example a geographical grouping of different geographical areas like Europa, USA, South America etc.

With reference to the description of Figure 5 and 6, Figure 7 illustrates how an investor can change the exposure to Europe by increasing the exposure with 50%, while USA is reduces by -38% just by touching and moving a type of computer modelled image of a potentiometer associated with each group, i.e. each geographical region. The investor can move the computer software modelled button 17 for example to the right thereby increasing the exposure to the group associated with the specific button 17. When moving to the left the exposure may for example be decreased. When this is done, i.e. changes of the exposure is done, the application program is configured to communicate the changes to the backend server system 11, which does the necessary recalculations of respective values of respective investors and instructing the trading system (or trading robot) 14 to execute the changes. This is done according to the selected re-balancing frequency.

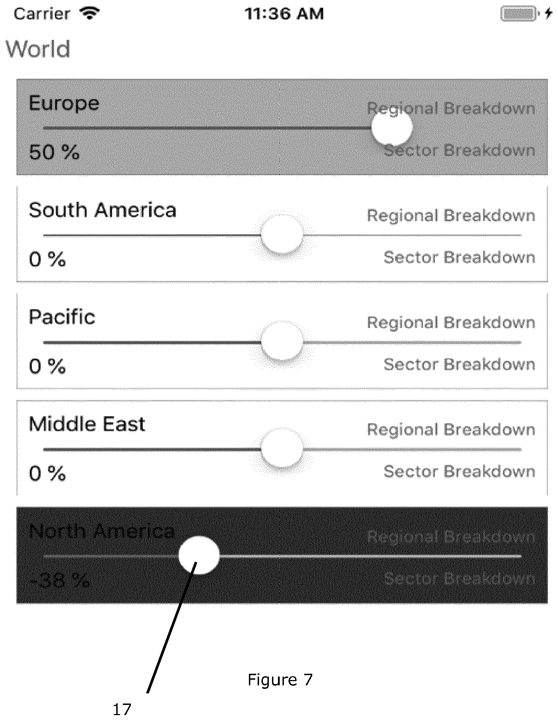

Figure 7 illustrates some interactive touch activating fields on the display of a mobile phone executing an example of application program according to the present invention. A first touch activating field is denoted "Regional breakdown". When an investor touches this field, the application program is configured to display for example different countries of a region associated with the specific activation field.

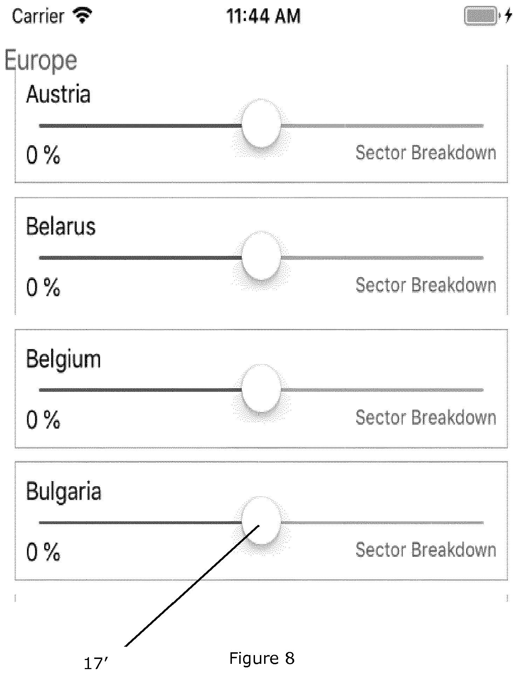

Figure 8 illustrates a break down to some European countries like for example Austria, Belarus, Belgium and Bulgaria. Each country is associated with a computer modelled potentiometer as discussed above. By moving the associated potentiometer button 17', the exposure to different countries can be changed. When this is done, i.e. changes of the exposure is done, the application program is configured to communicate the changes to the backend server system 11, which does the necessary recalculations of respective values of respective investors and is instructing the trading system (or trading robot) 14 to execute the changes.

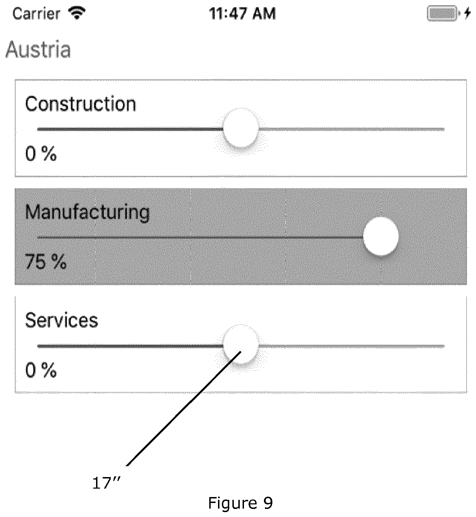

A user interface of an example of application program according to the present invention can also comprise a touch activating field section on the display denoted "Sector breakdown". For example, if the "Sector break down" field associated with Austria is touched (refer Figure 7), a display like the one illustrated in Figure 9 will appear. Three examples of sectors are displayed "Construction", Manufacturing" and "Services". By moving the associated potentiometer button 17', the exposure to different sectors can be changed. When this is done, i.e. changes of the exposure is done, the application program is configured to communicate the changes to the backend server system 11, which does the necessary recalculations of respective values of respective investors and is instructing the trading system (or trading robot) 14 to execute the changes. This aspect of the present invention gives small investors the ability actively to influence the prices in the market. If the prices goes down, the larger investors will certainly react. Especially, trading robots are sensitive to such changes.

Generally, the example of a graphical user interface according to the present invention comprises at least one interactive touch sensitive display field associated with an asset group, wherein the at least one touch sensitive display field comprise a further touch sensitive subfield, and

when the touch sensitive subfield is activated, the fund managing interface is configured to break down the touch sensitive field associated with the asset group into a plurality of further touchable subfields associated with respective sub categories in of the asset group enabling a user to increase or decrease a percentage of exposure to respective sub categories.

Respective subfields associated with respective sub categories may comprise further touch sensitive display fields, wherein when a further touch sensitive display field is activated, the fund managing interface is configured to break down a sub category into respective further sub categories.

The selection of geographical areas, countries, business sectors etc. is related to strategic choices based on knowledge of the respective investment areas. Such knowledge is of course sometimes based on guessing a business development that can influence the stock exchange market. The application program according to the present invention has the ability to guide an investor by communicating with different information sources like market analysis, news archives etc. enabling the investor to decide an investment in specific geographical areas and/or business areas. Figure 1 illustrate how a mobile phone 10, 10' can communicate with such information sources.

One important aspect of the present invention is that the system is capable of tracking investments of the total index fund, but also by tracking the individual investments of respective investors in real time. An investor will therefore have a real time feedback of how the investment and his strategy perform. If the investor sees that his prediction fails, the investor has the possibility to intervene and change his investment strategy at any time, i.e. change a percentage of his investment in a geographical area and/or business area for example.

The feedback provided by the system is educational in itself. Over time, investors will learn better to assess for example the impact of political changes in the world etc.

Another aspect of the present invention is the ability a specific investor has to compare his own performance with another investor. One aim is to learn if the strategy selected is better than another investor's investment strategy, or is worse, or is the same.

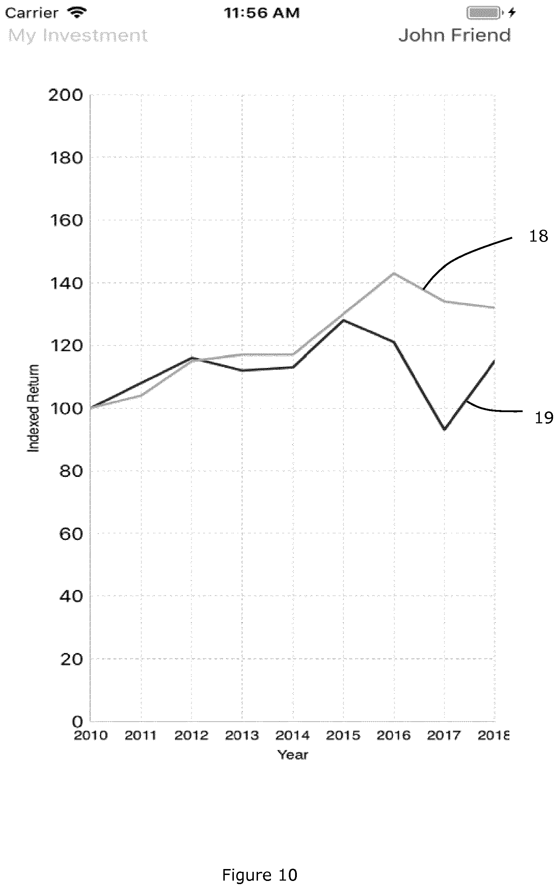

Figure 10 illustrates a performance graph illustrating how first investor 18 performs compared to second investor 19. The indexed return is given as a percentage of initial investment of respective investor. The graph illustrates the changes over years, but any timescale can be used.

According to an aspect of the present invention, a first investor may be allowed to follow investment performance of a second investor, for example via graphs as illustrated in Figure 10

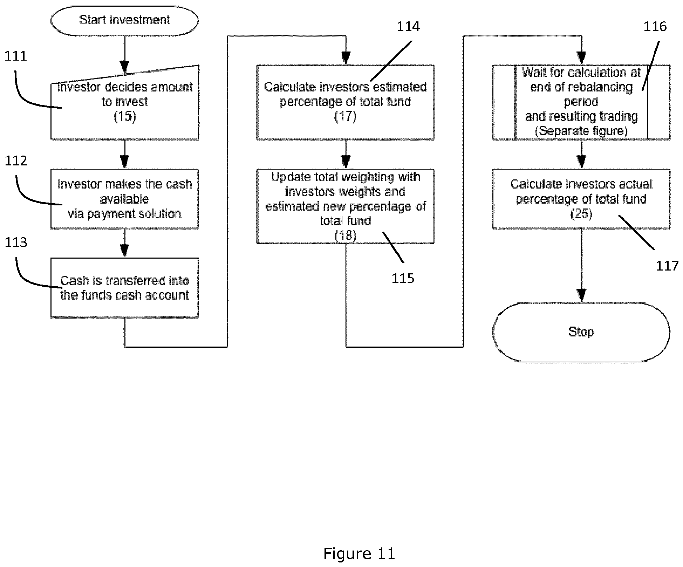

Figure 11 illustrates a typical sequence of steps when an investor decides to invest. The investor has initially downloaded a copy of an example of embodiment of the application program according to the present invention.

When executed the first time, the application program may start inquiring the investor about name, address, e-mail address, phone numbers, social security number etc. In addition, information about a bank account is recorded which the application program can configure to collect money from when investing in the index fund. Any money from sales of assets handled by the index fund can be deposited on this account as well.

The payment system can be according to any known payment system like for example Paypal. When the initial information is recorded, the application program notify the backend server system 11 illustrated in Figure 1. In addition, an investor account 12, 13 is generated by the backend server system 11 based on the information about the investor received from the associated mobile phone. From this account 12, 13 money can be drawn by the trading system 14 when authorized by the backend server system 11. The backend server system 11 receives the authorization from the mobile phone 10, 10' associated with the investor's name, which is associated with the associated investment account 12, 13.

Via a user interface (not illustrated) the investor decide the amount to invest in the index fund. In Figure 11, step 111 illustrate this step. The investor activates the payment solution 112, for example Paypal, by logging into the account of the payment system. The amount is then withdrawn from a bank account at the investor's disposal. As disclosed above, the information entered by the investor regarding name, address social security number etc. is then used to create the investment account associated with the investor. The money transferred via the payment system is then allocated 113 to the created investment account 12, 13.

The next step 114 is done by the backend server system 11 calculating the estimated percentage of the total index fund. It is important to understand that at this moment no actual purchase of assets is done. Therefore, the actual percentage is just an estimate at this point. In step 115, total weights are updated including investors choices as discussed with reference to Figure 6, Figure 7, Figure 8 and Figure 9. A new estimated percentage of the index fund is calculated. The backend server system is configured to instruct the trading system 14 to execute an investment according to the investment strategy defined by the updated weights of each group.

The next step 116 is to wait for the trade to be finished and reported by the trading system 14. At this stage the backend server system is configured to calculate the investor's actual percentage of the index fund in step 117.

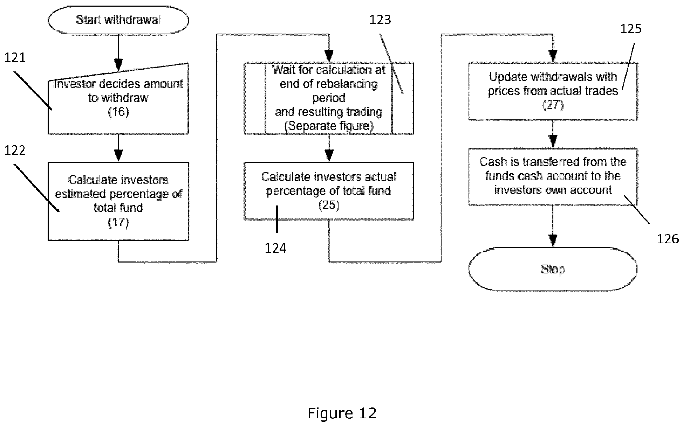

Figure 12 illustrates steps of a process of withdrawal of funds from the index fund. In step 121 the investor decides the amount to withdraw from the index fund. For example, the application program can be configured to receive a number that is a percentage, for example 10%, of the assets to be sold. It can also be a fixed monetary number, for example $1000. Before withdrawal, the estimated percentage the investor owns of the index fund is calculated 122. This is necessary to do since the market is changing all the time. The calculation is done after rebalancing of the index fund and resulting trading 123. Then in step 124, the actual percentage of the total fund is calculated. The withdrawals are updated with prices from actual trades 125. In step 126 cash is transferred to the account associated with the investor.

Both the process of buying and selling is related to a specific moment in time t, which implies a value of the index fund at time t. i.e. actual prices of transactions at time t.

Over time the prices of all assets in the fund will vary. Some will increase and some will fall. This changes the percentage of the total market cap for each individual asset. The process of realigning the distribution of assets owned by the fund with the distribution of market cap in based on new prices is called rebalancing. For the type of fund described here, new investor input will also be included in this process, whether that is deposits into the fund, withdrawals from the funds, or changed weighting for the investors investment.

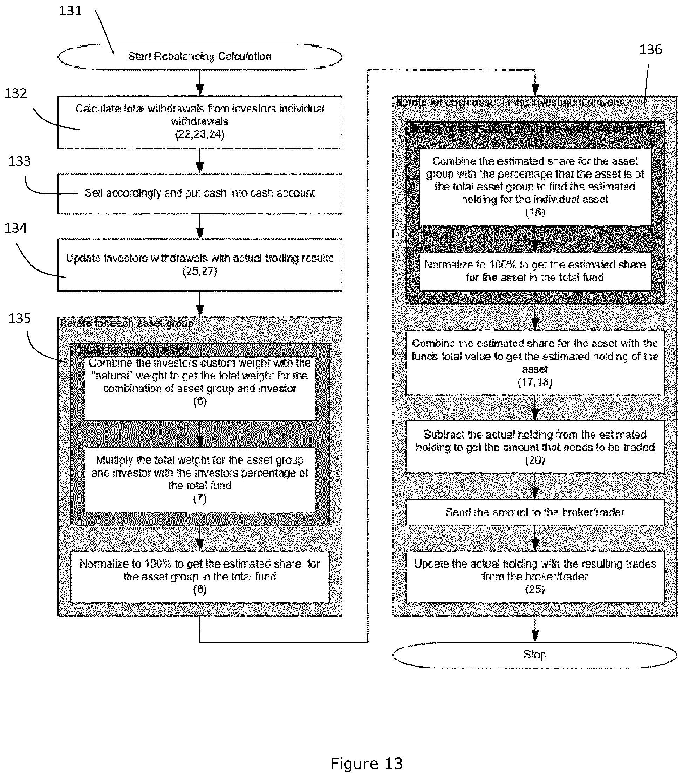

The rebalancing can be a process run regularly, or as a result of trades that needs to be accounted for in real time. Figure 13 illustrates a process of rebalancing of the index fund. As discussed above, different frequencies of re-balancing the fund influence the cost of the fund. In normal circumstances, the re-balancing happened when respective stock exchanges publish their end-of-day pricing.

With respect to Figure 2, different stock markets are assigned to the fund. It is obvious that a stock exchange in USA has a closing time different from a closing time of e European stock exchange. Therefore, when referring to a frequency, it is not a single frequency, but a frequency assigned to each respective stock exchange the fund is using. However, to simplify the matter, the rebalancing may happen when the last stock exchange of all the actual stock exchanges is closing for the day. Then all end-of-day prices are available.

In step 131 the rebalancing starts at time t followed by a step 132 comprising a calculation of total withdrawals from investors withdrawals up to time t from previous time the rebalancing was performed. In step 133 the withdrawals are converted into instructions from the backend server system 11 to the trading system 14 of selling assets according to the submitted instructions. Cash from the transactions are transferred to the respective investors account via the payment system. In step 134 actual trading results are used to update investors actual withdrawals.

In step 135 there is performed two interlinked iterative processes. One iterative process is related to the different assets groups as discussed with reference to Figure 6, Figure 7, Figure 8 and Figure 9. When a first group is investigated in the iterative process, a sub-iteration is performed for each investor with respect to what the investor has of assets in the first group. When the iteration of all investors with respect to assets in the first group is completed, a second group is processed wherein all users assets of the second group is evaluated as for the first group. As discussed above, the custom weights are combined with natural weights to obtain the total weight for the combination of asset group and investor. The total weight for the asset group and the investor is then multiplied with percentage of the total fund. The result is normalized to 100% thereby the estimated share of the asset group of the total index fund is found.

The next step 136 is an iteration for each asset in the index fund that is invested. However, this must be done in a further iterative process wherein each group the asset is part of is iterated.

Details of respective calculations is disclosed in the section below "Mathematical background".

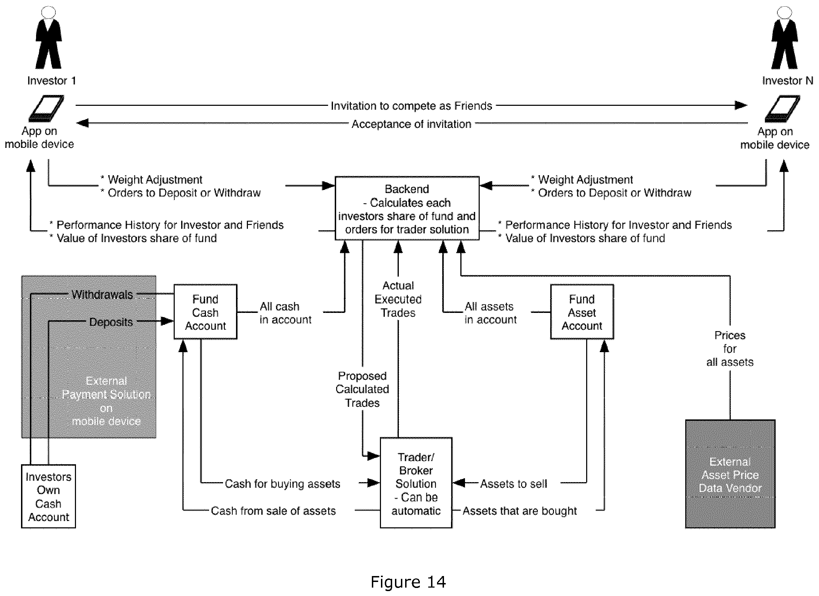

Figure 14 disclose further details of an example of system disclosed in Figure 1. The information flow discussed with respect to the flow diagrams of Figure 11, Figure 12, and Figure 13 is illustrated in Figure 14.

Another aspect of the application program, or client program according to the present invention, is that the interface comprises an interpreter that interprets and execute a scripting language enabling an investor to automate management and monitoring of a defined investment strategy. The investor can use the scripting language to create his own "trading robot". By following for example a performance indicator of his investments, the script language can instruct the system to change investment strategy, for example, redistribution of exposure to respective investment categories of the fund.

Here follows some non-limiting examples of scripts:

Example 1:

If Performance_indicator_change $\leq$ 5%, then

Decrease Europe 3% and Increase USA 3%, or
If Performance_indicator_change ≥ 5%, then
Transfer 1000$ to investment account, else
Wait one week and repeat.

Example 2:

If Performance_indicator_change ≤ 5%, then
Decrease Europe 3% and Increase USA 3%, or
If Performance_indicator_change ≥ 5%, then
Transfer 1000$ to investment account, else
Repeat.

Example 3:

If Performance_indicator_change ≤ 5%, then
Decrease Europe 3% and Increase USA 3%, or
If Performance_indicator_change ≥ 5%, then
Transfer 1000$ to investment account, else
Repeat until Performance_indicator_change ≥ 3%, or
Terminate if Performance indicator_change ≤ 2%.

The script language is also configured to access market information directly, for example monitoring the Dow Jones industrial index.

The present invention is a novel system and method enabling ordinary people to invest actively smaller amount of money in stocks and/or commodities. Prior art solutions are expensive excluding ordinary people from investing in funds. One important aspect of the present invention is that a number of smaller investors can influence pricing of assets in the market. Further, the system and method of the present invention requires little knowledge beforehand for people willing to try embodiments of the present invention.

*Mathematical background:*

Definitions:

Investor (i) - a specific investor that owns assets in the fund

Asset(a) - a specific asset that the fund has invested in

Time (t) - a specific day

Previous day (t-1) - the day before t

Deposit (dep) - the value of a deposit an investor(i) makes to the index fund at any given time(t):

$$dep(i, t)$$

Withdrawal (wdr) - the value of a withdrawal an investor(i) makes from the index fund at any given time(t):

$$wdr(i, t)$$

Investment (I) - the amount each investor(i) owns in the index fund at any given time (t) :

$$I(i,t)$$

Total number of investors (m) in the index fund at any given time(t):

$$m(t)$$

Total number of distinct assets (n) in the index fund at any given time(t):

$$n(t)$$

Weighting group (g) - all assets(a) will belong to one ore more weighting groups (g) at any given time(t):

$$g(a,t)$$

Amount owned (o)- the number of each specific asset(a) that the index fund owns at any given time(t):

$$o(a,t)$$

Price (p) - the market price that each instrument have at a given time(t)

$$p(a,t)$$

Market cap (mc) - the value that all issues of a given asset(a) have in the market at a given time(t)

$$mc(a,t) \tag{1}$$

Return (r) - the change in market price defines the return of each asset(a) at a given time(t) since the previous time(t-1):

$$r(a,t) = \frac{p(a,t) - p(a,t-1)}{p(a,t-1)} \tag{2}$$

Value (v) - the index funds holdings of a specific asset(a) can be calculated at any given time(t):

$$v(a,t) = o(a,t) * p(a,t) \tag{3}$$

Total value (TV) - the total value of the index fund can be calculated at any given time(t):

$$TV(t) = \sum_{a=1}^{n(t)} v(a,t) \tag{4}$$

Natural weight (nw) - the market cap of a specific asset(a) as a percentage of the combined total market cap of all assets included in the index funds investment universe:

$$nw(a,t) = \frac{mc(a,t)}{\sum\limits_{a=1}^{n(t)} mc(a,t)}$$

(5)

Custom weight (cw) - the custom weight that the investor(i) have selected for a weighting group (g) is valid for all asset(a) in the weighting group at any given time(t):

$$cw(i,a,t) = cw(i, g(a,t), t)$$

(6)

Combined weight (W) - the combined weight is calculated from the natural weight(nw) and the custom weight(cw) for each investor(i) and asset(a) at any given time(t):

$$W(i,a,t) = nw(a,t) * \frac{cw(i,a,t) + 100}{100}$$

(7)

Investor return(R)- based on the combined weight(W), each investor(i) will have a weighted return for the investment:

$$R(i,t) = \sum\limits_{a=1}^{n(t)} (W(i,a,t-1) * r(a,t))$$

(8)

Percentage (P) - based on the investors' returns(R) and percentage(P) at an earlier time (t-1), the percentage of the index fund can be calculated at any given time(t):

$$P(i,t) = \frac{P(i,t-1) * R(i,t)}{\sum\limits_{i=1}^{m(t)} (P(i,t-1) * R(i,t))}$$

(9)

Investors Value (IV) - the value of each investors(i) investment at any given time (t):

$$IV(i,t) = P(i,t) * TV(t)$$

(10)

_Real time Rebalancing_

At any time(t) all investors values must be recalculated and the index funds holdings of assets adjusted to mirror the combination weights of the investors combined. This starts with the same values at the previous time(t-1) and adjusts for all the changes at time(t):
Before the maintenance the index fund will have a total value and distribution of assets, based on the values of the instruments the index fund actually holds:

$$TV(t-1) = \sum\limits_{a=1}^{n(t-1)} v(a,t-1)$$

(11)

Each investor(i) will have an investors value at the previous time(t-1):

$$IV(i, t-1)$$

Each investor(i) will have a combined weight distribution for all assets (a) set at the previous time (t-1):

$$W(i, a, t-1) \qquad (12)$$

The weight distribution defines the investor estimated return(R) for the investor between t-1 and t:

$$R_{estimated}(i,t) = \sum_{a=1}^{n(t)} \left( W(i,a,t-1) * r(a,t) \right) \qquad (13)$$

When investors invest, they make a certain amount of cash available in their account. When rebalancing, this cash is transformed into a percentage of the index funds total value, and this percentage is added to the users account so that the growth of this investment are controlled by the users input. When rebalancing, each investor(i) will have made deposits (can be zero) since previous rebalancing (t-1), that will be included in the investors value at the new time(t):

$$dep(i, t) \qquad (14)$$

When investors want to withdraw their index funds, they mark a percentage of their investment for withdrawal. When rebalancing, each investor(i) will have made withdrawals (can be zero) since previous rebalancing (t-1), that will be excluded from the investors value at the new time(t), this can be represented as a percentage of the total investors value:

$$wdr(i, t) = P_{withrawal} * IV(i, t-1) \qquad (15)$$

All this will define the new estimated investors value(IV) for the investor:

$$IV_{estimated}(i,t) = IV(i,t-1) * (1 + R_{estimated}(i,t)) \\ + dep(i,t) - wdr(i,t) \qquad (16)$$

The new estimated distribution of assets(a) for the total index fund is calculated:

$$v_{estimated}(a,t) = \sum_{i=1}^{m(t)} \left( W(i,a,t) * IV_{estimated}(i,t) \right) \qquad (17)$$

The new estimated total value for the index fund is then:

$$TV_{estimated}(t) = \sum_{a=1}^{n(t)} v_{estimated}(a,t) \qquad (18)$$

Given the calculations above, the estimated transaction list of value changes (chng), can be sent to the broker/trading system at the time when the index fund is to rebalanced:

$$chng_{estimated}(a,t) = v_{estimated}(a,t) - v(a,t-1) \qquad (19)$$

The estimated amount of each asset that needs to be traded, can be calculated based on the asset (close) price:

$$amnt_{estimated}(a,t) = \frac{chng_{estimated}}{p(a,t)} \qquad (20)$$

This gives automatically the transaction list to be sent to the broker/trader solution to alter the composition of the index fund through trading.

Withdrawals must be followed up separately to control the liquidity when turning assets into cash. A separate trading list for the assets that will be traded into cash for withdrawals is calculated.

Each investor's (i) withdrawal can be represented as a distribution of assets(a) from the investors account:

$$wdr(i,a,t) = P_{withdrawal} * IV(i,t-1) * W(i,a,t-1) \qquad (21)$$

The estimated amount of each asset that needs to be traded of each asset(a) for each investor(i), can be calculated based on the asset (close) price:

$$wdramnt_{estimated}(i,a,t) = \frac{wdr_{estimated}(i,a,t)}{p(a,t)} \qquad (22)$$

To get the total withdrawal list, the summation for all investorsis:

$$wdramt_{estimated}(a,t) = \sum_{i=1}^{m(t)} wdramt_{estimated}(i,a,t) \qquad (23)$$

*Accounting*

When the adjustments needed for every asset is processed by the broker/trader solution there will probably be a small deviation between the actual traded price and amount, and the closing price and calculated amounts used in the calculations above. For each asset(a) there is a price(p) and the traded amount(amnt) for the actual trading at any given time(t):

$$p_{actual}(a,t) \qquad (24)$$

$$amnt_{actual}(a,t)$$

The index funds total value will still be calculated from the closing price(p). However it is necessary to take into account any deviations in the traded amount. The actual distribution of assets(a) for the total index fund after trading is:

$$v_{actual}(a,t) = v_{estimated}(a,t) -$$

$$p(a,t) * (amnt_{estimated}(a,t) - amnt_{actual}(a,t)) \qquad (25)$$

The total value for the index fund is then:

$$TV_{actual}(t) = \sum_{a=1}^{n(t)} v_{actual}(a,t) \qquad (26)$$

To control liquidity, it is important that withdrawals are paid based on the actual traded amounts and prices in case they differ from the estimated prices. To be able to manage this automatically the system will make a special list of all assets that have to be sold to get cash for withdrawals. After the processing, the actual numbers must be returned:

$$wdr_{actual}(i,t) = \sum_{a=1}^{n(t)} (wdramnt_{actual}(i,a,t) * p_{actual}(a,t))$$

$$(27)$$

This is the amount being transferred to the investor's account.

**Claims**

1. A computer implemented fund management system comprising a plurality of mobile phones (10, 10') in communication with a backend server (11), which is further in communication with a trading system (14), wherein respective mobile phones are configured to receive investment choices, either manually from respective investors, or via an interpreter executing instructions configured to implement an investment strategy.

2. The system of claim1, wherein the plurality of mobile phones (10, 10') is configured by a downloaded fund managing application program, wherein the fund managing application program is configured with a graphical user interface,

   - the graphical user interface comprises at least one interactive touch sensitive display field associated with at least one asset group of the fund enabling an investor of the application program to increase or decrease a percentage of an exposure to the at least one associated asset groups of the fund,
   - a change of a percentage of an investment in a specific asset group is communicated by the fund managing interface to the backend server system (11),
   - the backend server system is configured to responds to the change of a percentage of an investment by communicating instructions of selling and/or buying assets to respective trading systems (14) associated with the asset group(s) being changed.

3. The system of claim 2, wherein when the trading system receives notifications from the respective stock exchanges and/or commodity exchanges comprising achieved prices, the trading system communicate the resulting result to the backend server (14), which is configured to communicate obtained values of investments back to respective mobile phones (10, 10').

4. The automated fund system of claim 1, wherein the backend server (14) is configured to allow a first investor to follow an investment performance of a second investor.

5. The automated fund system of claim 2, wherein the at least one interactive touch sensitive display field is a computer model of a gliding physical potentiometer, wherein a position of a button of the potentiometer indicate a percentage change of exposure to the associated asset group.

6. The system of claim 5, wherein the at least one interactive touch sensitive display field associated with an asset group comprises at least one further touch sensitive subfield,

   - when the further touch sensitive subfield is activated, the fund managing interface is configured to break down the touch sensitive field associated with the asset group into a plurality of further touchable subfields associated with respective sub categories of the asset group enabling a user to increase or decrease a percentage of exposure to respective sub categories.

7. The automated fund system of claim 6, wherein respective further subfields associated with respective sub categories comprises further touch sensitive display fields, wherein when a further touch sensitive display field is activated, the fund managing interface is configured to break down a sub category into respective further sub categories.

8. The automated fund system of any claim 4-7, wherein an asset group comprises at least a geographical region, and/or countries, and/or industrial secto rs.

9. The automated fund system of claim 1, wherein the fund managing interface is configured to be in communication with bank accounts held by respective investors, wherein an investor can issue requests of transfer of a specified amount of money onto their respective investor accounts controlled by the backend server system (11).

10. The automated fund system of claim 1, wherein the backend server system is configured to transfer money gained from selling assets done by the trading system (14) to respective investor accounts, and further configured to communicate the new account balances to the respective investors fund managing interfaces in their respective mobile phones.

11. The system of claim 1, wherein the scripting language comprises instructions enabling a script, when executed, to at least follow a performance indicator and detecting a change of the performance indicator to be below, or above, or equal to a defined value.

12. The system of claim 11, wherein a script executing in the interpreter is configured to terminate after being repeated a defined number of times.

13. The system of claim 12, wherein the termination of the script is defined by a threshold level derived from the performance indicator.

14. The system according to claim 11, wherein the scripting language comprises instructions of changing exposure of respective investments in different investment categories of the fund.

15. The automated fund system according to claim 1, wherein the backend server is configured to do rebalancing of the fund at a defined time t.

16. The automated fund system according to claim 1, wherein the fund is an index fund.

17. A computer implemented method of user controlled investments in a fund controlled by a fund managing server system according to claim 1, wherein the fund is investing in assets groups, wherein the computer implemented method comprises steps of:

    - an investor decides an amount to invest in the fund,
    - the investor activates a payment solution transferring the amount to an investment account in his name in a fund managing server system,
    - the fund managing server system calculates an estimated percentage of the total fund owned by the investor,
    - use the estimated percentage of the total fund of the investor with the percentage of each other investor in the fund, and update the estimated percentage accordingly,
    - wait until results of the trading with the investors amount is finished, and rebalancing the fund,
    - calculate investors actual percentage of the fund based on the result of the trading and the rebalancing of the fund.

18. The method according to claim 17, further comprising steps of:

    - when an investor withdraw an amount from the fund, the investor decides the amount to withdraw,
    - the investors estimated percentage of the total fund is calculated after assets has been sold and rebalancing of the fund,
    - the investors actual percentage of the fund is calculated,
    - update the withdrawal with actual process from the trade,
    - transfer cash to the investors investor account.

19. The method according to claim 17, wherein rebalancing comprises the steps of:

    - calculate total withdrawals from investors individual withdrawals,
    - sell assets accordingly and put cash into respective investor accounts,
    - update investors withdrawals with actual trading results, then
    - in an outer iterate loop for each asset group:
    - iterate in an inner loop for each investor:

        ◦ calculate a total percentage of the total fund for each investor from a combination of asset group and investor,

◦ multiply the percentage from the combination of the asset groups and investor with the investor's percentage of the total fund,
◦ normalize to one hundred percent to get the estimated share for the asset group in the total fund, then

- iterate in an outer iteration loop for each asset the fund is invested:

    - iterate in an inner loop for each asset group the asset is part of:

        ◦ combine the estimated stocks of the asset groups with the percentage that the asset is of the total asset group, thereby finding the estimated holding,
        ◦ normalize to one hundred percent to get the estimated share of the asset in the total fund,

    - combine the estimated share of the asset with the funfs total vfalue to get the estimated holding of the asset,
    - subtract the actual holding from the estimated holding to get the amount that needs to be traded,
    - send the amount to a broker or a trading system,
    - update the actual holding with the resulting trades form the boker or trading system.

20. The method according to claim 19, wherein the step of rebalancing is performed when a last one of the stock exchanges and/or commodity exchanges the fund is trading with is closing.

21. The method according to claim 19, wherein the step of rebalancing is performed at a defined time t.

22. The method according to claim 19, wherein the step of rebalancing is performed on instructions from a system administrator.

23. The method according to claim 17, wherein the fund is an index fund.

Figure 1

Figure 2

Figure 3

Figure 4

Figure 5

Figure 6

Figure 7

17

Carrier 📶    11:44 AM    🔋 ⚡

Europe

Austria

0 %    Sector Breakdown

Belarus

0 %    Sector Breakdown

Belgium

0 %    Sector Breakdown

Bulgaria

0 %    Sector Breakdown

17'    Figure 8

Carrier 📶       11:47 AM       🔋⚡

Austria

Construction

0 %

Manufacturing

75 %

Services

0 %

17″

Figure 9

Carrier 📶       11:56 AM       🔋 ⚡

My Investment       John Friend

Figure 10

**Figure 11**

Figure 12

131

Start Rebalancing Calculation

136

132

Calculate total withdrawals from investors individual withdrawals
(22,23,24)

Iterate for each asset in the investment universe

Iterate for each asset group the asset is a part of

133

Sell accordingly and put cash into cash account

Combine the estimated share for the asset group with the percentage that the asset is of the total asset group to find the estimated holding for the individual asset
(18)

134

Update investors withdrawals with actual trading results
(25,27)

Normalize to 100% to get the estimated share for the asset in the total fund

135

Iterate for each asset group

Iterate for each investor

Combine the investors custom weight with the "natural" weight to get the total weight for the combination of asset group and investor
(6)

Combine the estimated share for the asset with the funds total value to get the estimated holding of the asset
(17,18)

Multiply the total weight for the asset group and investor with the investors percentage of the total fund
(7)

Subtract the actual holding from the estimated holding to get the amount that needs to be traded
(20)

Send the amount to the broker/trader

Normalize to 100% to get the estimated share for the asset group in the total fund
(8)

Update the actual holding with the resulting trades from the broker/trader
(25)

Stop

Figure 13

Figure 14

**Europäisches Patentamt**
**European Patent Office**
**Office européen des brevets**

# EUROPEAN SEARCH REPORT

Application Number

EP 18 20 8085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/278181 A1 (SHAH RAJAN [US]) 28 September 2017 (2017-09-28) * abstract * * paragraphs [0010] - [0012], [0017], [0021], [0030], [0045] - [0046], [0048], [0077], [0092] - [0093] * * figures 1-2,17,21 * ----- | 1-23 | INV. G06Q40/04 G06Q40/06 |

TECHNICAL FIELDS SEARCHED (IPC)

G06Q

The present search report has been drawn up for all claims

| Place of search | Date of completion of the search | Examiner |
|---|---|---|
| The Hague | 5 February 2019 | Thareau-Berthet, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
### ON EUROPEAN PATENT APPLICATION NO.

EP 18 20 8085

This annex lists the patent family members relating to the patent documents cited in  the above-mentioned European search report.
The members are as contained in the European Patent Office EDP file on
The European Patent Office is in no way liable for these particulars which are merely given for the purpose of information.

05-02-2019

| Patent document cited in search report | Publication date | Patent family member(s) | Publication date |
|---|---|---|---|
| US 2017278181 A1 | 28-09-2017 | NONE | |

For more details about this annex : see Official Journal of the European Patent Office, No. 12/82

EPO FORM P0459